(19) Europäisches Patentamt
European Patent Office
Office européen des brevets

(11) **EP 2 062 379 B1**

(12) **EUROPEAN PATENT SPECIFICATION**

(45) Date of publication and mention
of the grant of the patent:
**10.11.2010 Bulletin 2010/45**

(21) Application number: **07803291.9**

(22) Date of filing: **06.09.2007**

(51) Int Cl.:
**H04B 7/08** *(2006.01)*

(86) International application number:
**PCT/EP2007/059336**

(87) International publication number:
**WO 2008/028942 (13.03.2008 Gazette 2008/11)**

(54) **METHOD OF RECEIVING WIDEBAND SIGNAL WITH MULTIPLE ANTENNAS AND CORRESPONDING RECEIVER**

VERFAHREN ZUM EMPFANG EINES BREITBANDSIGNALS MIT MEHREREN ANTENNEN UND ENTSPRECHENDER EMPFÄNGER

PROCÉDÉ DE RÉCEPTION DE SIGNAL À LARGE BANDE AU MOYEN DE PLUSIEURS ANTENNES ET RÉCEPTEUR CORRESPONDANT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.09.2006 US 517533**

(43) Date of publication of application:
**27.05.2009 Bulletin 2009/22**

(73) Proprietor: **Telefonaktiebolaget LM Ericsson (publ)**
**164 83 Stockholm (SE)**

(72) Inventor: **KHAYRALLAH, Ali S.**
**Cary, North Carolina 27519 (US)**

(74) Representative: **Akerman, Marten Lennart et al**
**Ericsson AB**
**Patent Unit Mobile Platforms**
**Nya Vattentornet**
**221 83 Lund (SE)**

(56) References cited:
**EP-A- 1 533 916**     **EP-A2- 1 065 804**
**US-A1- 2005 078 649**     **US-A1- 2005 141 412**

**Description**

Variable bandwidth receivers have also been proposed for high speed data connections in mobile communications networks. A variable bandwidth receiver is able to handle bandwidths that are multiples of a predetermined baseline bandwidth, e.g., 5 MHz, 10 MHz, and 20 MHz. The receiver may include a separate front end for each possible bandwidth. Alternatively, the receiver front end may employ multiple filters, or a variable filter, to filter a received wideband signal.

Multiple antenna receivers are also known. For example, diversity receivers typically receive the same signal on two or more antennas. Similarly, receivers for single-input, multiple-output (SIMO), and multiple-input multiple-output (MIMO) systems are also known. PCT Patent Publication WO 2005/067171 discloses a multiple antenna receiver that can be selectively configured to receive with one or more antennas.

In general, the complexity of the baseband processor will vary with the bandwidth of the receivers attached to different antennas, and with the number of antennas. While it may be best to use receivers with the widest bandwidth covering all signals of interest on every antenna, a finite baseband complexity budget effectively limits the usable bandwidth of the receivers attached to different antennas. To a first order approximation the total baseband complexity is proportional to the sum of the individual bandwidths of the available receivers. As a result, it is crucial to allocate antenna resources in a way that maximizes the use of baseband resources.

EP 1 533 916 A1 discloses a diversity switch combiner for use in systems for receiving wideband signals, which is arranged to split the received signal into separate channels each carrying a respective frequency band. Respective switch means are provided for each channel in order to switch the input of each channel between different antennas. A switch control determines the switch setting in accordance with the result of a comparison operation, preferably performed during a guard period, in which the signal qualities for different settings are compared.

SUMMARY

The present invention relates to a variable bandwidth receiver with multiple antennas that may be selectively configured based on channel conditions. In one embodiment, the receiver may be configured to receive a single wideband signal on all antennas, or to receive multiple sub-signals of the wideband signal on separate antennas. The latter configuration offers diversity over a single antenna wideband receiver. The present invention allows the antenna resources to be allocated in such a way as to efficiently utilize baseband processing resources.

In one embodiment, the receiver selectively assigns antennas to different sub-signals of a wideband signal based on signal quality estimates, such as signal to noise ratio (SNR). The receiver may have a greater number of antennas than sub-signals. The spare antenna(s) may be selectively assigned to a given sub-signal based on a periodic assignment, a pseudo-random assignment, or on signal quality measurements.

In one embodiment, sub-signals with different bandwidths may be received with different antennas. The signals received on the different antennas may overlap in the frequency domain. Again, the antennas may be assigned to receive the selected signals based on a periodic assignment, a pseudo-random assignment, or based on quality measurements.

BRIEF DESCRIPTION OF THE DRAWINGS

    Fig. 1 illustrates an exemplary multi-antenna receiver.
    Fig. 2A illustrates the multi-antenna receiver configured to receive four sub-signals on four different antennas.
    Fig 2B illustrates a wideband signal with adjacent and non-overlapping sub-signals.
    Fig 2C illustrates a wideband signal with adjacent and overlapping sub-signals.
    Fig. 3 illustrates the multi-antenna receiver configured to receive three sub-signals of a wideband signal using four antennas.
    Fig. 4 illustrates the multi-antenna receiver configured to receive variable sub-signals of a wideband signal having different bandwidths.
    Fig. 5 illustrates the multi-antenna receiver configured as a single antenna wideband receiver.
    Fig. 6 illustrates the multi-antenna receiver configured as a wideband diversity receiver.
    Fig.7 illustrates a flow chart for antenna selection.

DETAILED DESCRIPTION

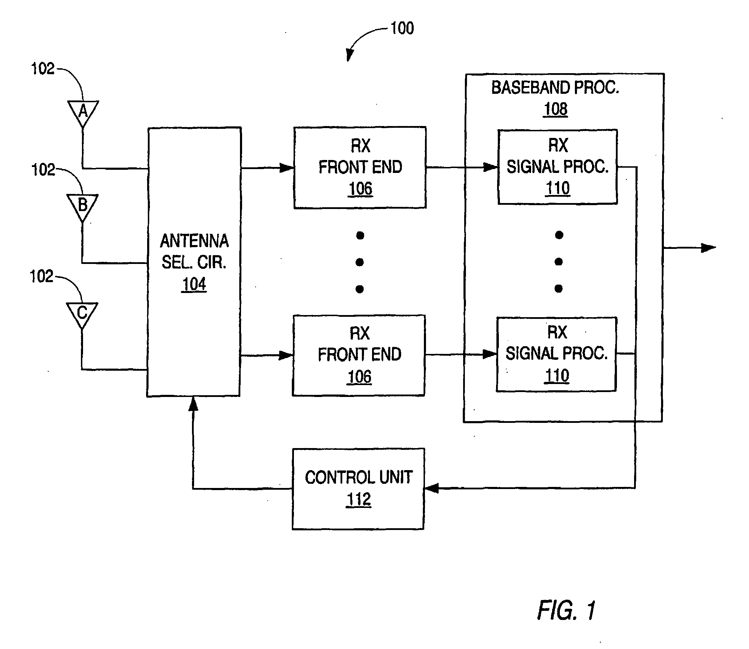

Referring now to the drawings, Figure 1 illustrates an exemplary multi-antenna receiver 100. Receiver 100 includes a plurality of receive antennas 102, an antenna selection circuit 104, one or more front end circuits 106, baseband processing circuit 108, and a control unit 112. Antennas 102 receive a wideband signal comprising a plurality of sub-signals. The sub-signals of the wideband signal occupy different portions of the frequency spectrum of the wideband signal. The sub-signals may be spaced apart in the frequency domain, or may overlap in frequency. The frequency bands of the sub-signals may be adjacent or non-adjacent. Taken together, the frequency bands of the sub-signals will generally cover the frequency band of the whole signal. However, it is sometimes preferable to leave some portion of the total signal un-used. This can happen for instance when a certain frequency sub-band of the signal experiences a deep fade. Given finite resources, it may be beneficial to ignore that sub-band and focus attention on other sub-bands with higher quality. The wideband signal may comprise, for example, a multi-carrier CDMA signal or OFDM signal. The sub-signals of the wideband signal may occupy different sub-channels of a wideband channel. The sub-channels may have different bandwidths and may overlap in frequency.

Antenna selection circuit 104 operates under the control of control unit 112. The antenna selection circuit 104 comprises a switching circuit for connecting antennas 102 with selected front end circuits 106. As will be described in greater detail below, control unit 112 selects which antennas 102 to use to receive the wideband signal and assigns the selected antennas 102 specific sub-signals of the wideband signal. The control unit 112 may select less than all of antennas 102 and may assign two or more antennas 102 to receive the same sub-signal. In one mode of operation, control unit 112 may configure the receiver 100 as a single-antenna wideband receiver by connecting a single antenna 102 to two or more front-end circuits 106 covering the entire frequency spectrum of the wideband signal.

Front end circuits 106 perform frequency conversion, filtering, and amplification of the received signals. The front end circuits 106 also sample and digitize the received signal for input to the baseband processing circuit 108. In some embodiments, separate front end circuits 106 may be provided for each antenna 102. The number of front end circuits 106 may equal the number of sub-signals in the wideband signal and have fixed channel assignments, one for each sub-signal of the wideband signal. In other embodiments, the frequency assignment for front end circuits 106 may be controlled by control unit 112. Also, in some embodiments, one or more receiver front ends 106 may be configured to receive a variable bandwidth signal. For example, receiver front end circuit 106 may include a variable bandwidth amplifier, or may use a set of filters to filter the wideband signal to filter out all but the desired frequencies.

Baseband processing circuit 108 includes one or more receive signal processing circuits 110 for demodulating and decoding the signals output by front end circuits 106. In some embodiments, the signals output by front end circuits 106 may be demodulated and decoded separately. In other embodiments, joint demodulation and decoding may be performed. Receive signal processing circuits 110 may use conventional processing techniques, such as RAKE processing, G-RAKE processing, MMSE processing, etc. Receive signal processing circuits 110 provide channel quality metrics to control unit 112. The control unit 112 uses the channel quality metrics to select the receiver configuration and to allocate the antennas. In one embodiment, baseband processing circuit 108 provides a signal-to-noise ratio (SNR) for each antenna/sub-signal combination to control unit 112. The SNR for each sub-signal may be estimated using known techniques from a pilot signal. For example, assuming a wideband signal comprising sub-signals A and B, the baseband processing circuit 108 may provide three SNRs for each antenna 102: one for sub-signal A, one for sub-signal B, and one for the sub-signal A+B. Control unit 112 uses the SNRs provided by baseband processing circuit 108 to select and allocate the antennas 102.

Receiver 100 may be configured in a wideband mode to receive the entire wideband signal from two or more antennas 102, or in a multi-carrier mode to receive different sub-signals of the wideband signal with different antennas 102. In the multi-carrier mode, different antennas 102 may be assigned to receive different sub-signals of the wideband signal, which may overlap in frequency. In some embodiments, there may be more receive antennas 102 than sub-signals. In this case, a spare antenna 102 may be assigned to receive a designated sub-signal to improve reception performance. In the multi-carrier mode, different antennas 102 may be assigned to receive signals with different bandwidths, which may overlap in the frequency domain.

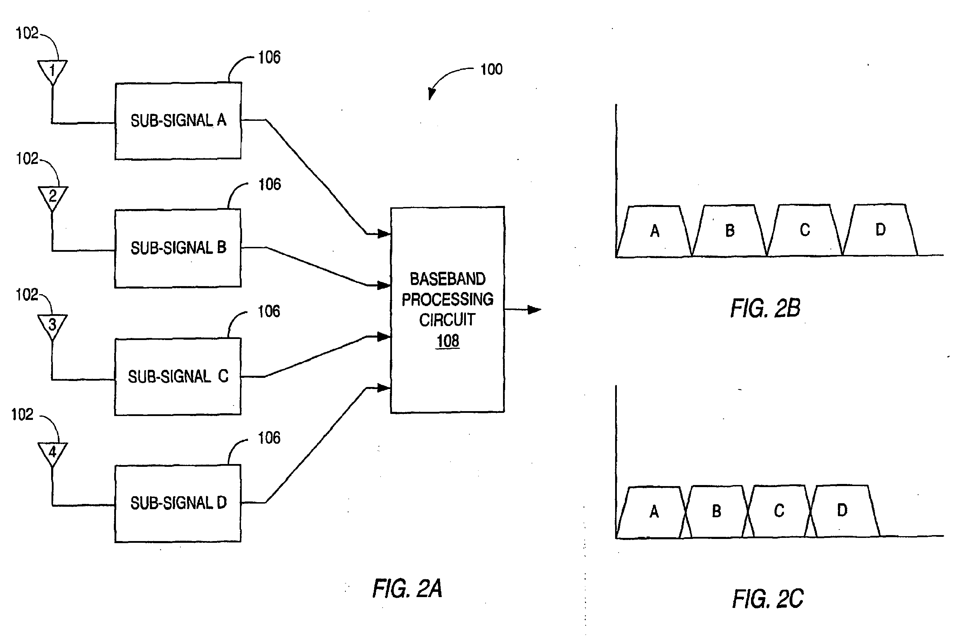

Figure 2A illustrates a multi-antenna receiver 100 having four spatially-diverse antennas 102 configured in a multi-carrier mode. In this example, the four receive antennas 102 are assigned to receive separate sub-signals denoted by letters A - D representing discrete frequency components of the wideband signal. The sub-signals may occupy non-overlapping frequency ranges in the wideband signal as shown in Figure 2B, or may occupy overlapping frequency ranges in the wideband signals as shown in Figure 2C. While Figures 2B and 2C illustrate the sub-signals in adjacent frequency bands, those skilled in the art will appreciate that the sub-signals may occupy non-adjacent frequency bands. Collectively, receive antennas 102 cover the entire bandwidth of the transmitted signal. It should be noted that the antenna assignments may be updated periodically by control unit 112 based on signal quality measurements from baseband processing circuit 108. Baseband processing may be performed in a conventional manner by ignoring the fact that the sub-signals are received on different antennas 102. The sub-signals may be added in baseband and processed the same as a single wideband signal. Due to the merging of information from multiple antennas 102, there is a spatial diversity gain as compared to a single antenna receiver. In this case, the channel estimation function produces a set of channel estimates that reflects the composite of the sub-channels. Further, the spatially diverse antennas provide significant advantages in terms of interference suppression.

In some embodiments, sub-signals A - D may be processed separately to improve performance. If the sub-signals are processed separately, the channel estimation performed by baseband processing circuit 108 produces two sets of channel estimates describing the channel response in different portions of the frequency domain. A composite estimate may then be generated by converting the two sets of channel estimates into the frequency domain, shifting the estimates appropriately and adding them, then converting back to the time domain. Converting between the time domain and frequency domain may be readily achieved using a Fast Fourier Transform (FFT) function.

To illustrate, consider a scenario where the total signal bandwidth is divided into 2 sub-bands, denoted A and B. The channel estimates over sub-band A can be described by the time domain coefficients $C_A(0)$, $C_A(1)$, ..., $C_A(M_A -1)$. Similarly, the channel estimates over sub-band A can be described by the time domain coefficients $C_B(0)$, $C_B(1)$, ..., $C_B(M_B -1)$. In order to obtain a common channel estimate for the total bandwidth (A and B), we can merge the 2 sub-band estimates, using an FFT of size N no less than either $M_A$ or $M_B$. Typically, N is a power of 2. We apply the size N FFT to $C_A(0)$, $C_A(1)$, ..., $C_A(M_A -1)$, padded with $(N- M_A)$ zeros, to obtain N FFT coefficients, denoted $D_A(0)$, $D_A(1)$, ..., DA(N -1). Similarly, we apply the size N FFT to $C_B(0)$, $C_B(1)$, ..., $C_B(M_A -1)$, padded with $(N- M_B)$ zeros, to obtain N FFT coefficients, denoted $D_B(0)$, $D_B(1)$, ..., $D_B(N -1)$. Next we concatenate the FFT coefficients into the length 2N sequence $D_A(0)$, $D_A(1)$, ..., $D_A(N - 1)$, $D_B(0)$, $D_B(1)$, ..., $D_B(N -1)$. Finally, we apply a length 2N inverse FFT to this sequence, to obtain a composite channel in the time domain, given by the 2N coefficients $C(0)$, $C(1)$, ..., $C(2N -1)$. Note that some of the composite channel coefficients may be very small in magnitude, and can be set to zero. Also note that the effective time domain resolution of the composite channel is higher than that of either sub-band channel. For instance, suppose the total bandwidth is 5 MHz, and each sub-band is 2.5 MHz. Then the resolution of the channel of each sub-band is 400 ns, while that of the total channel is 200 ns. In other words, the coefficients $C_A(0)$, $C_A(1)$, ..., $C_A(M_A -1)$ are on a 400 ns time grid, whereas $(0)$, $C(1)$, ..., $C(2N -1)$ are on a 200 ns grid. In general, this FFT merging method can be easily extended to multiple sub-bands, or even to non-contiguous sub-bands.

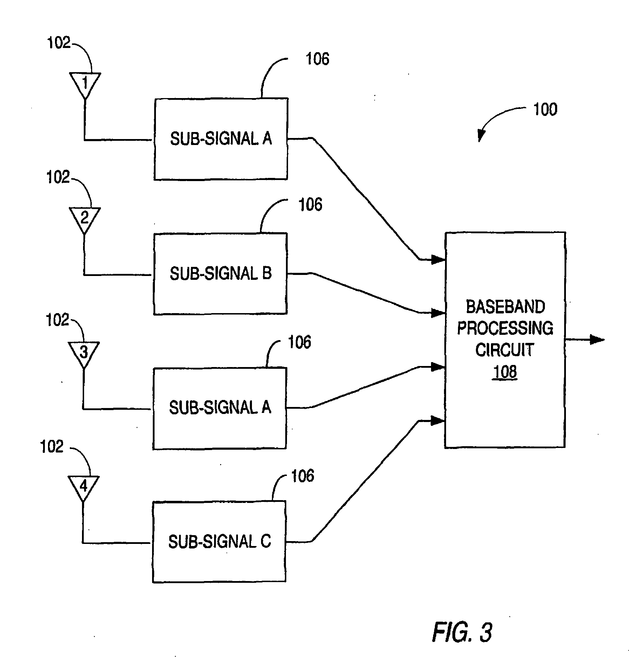

Figure 3 illustrates a multi-antenna receiver 100 with four spatially-diverse receive antennas 102 configured in a multi-carrier mode and having a "spare" antenna 102. The "spare" antenna 102 may be used to improve reception of one of the sub-signals. In this example, two receive antennas 102 are assigned to receive sub-signal A, and one antenna 102 is assigned to each of sub-signals B and C. As noted above, control unit 112 my periodically update the antenna assignments based on channel quality information provided by baseband processing circuit 108. One simple approach would be to select three antennas 102 to serve as "primary" antennas 102 to receive respective sub-signals and to use the spare antenna 102 as a "secondary" antenna 102 for one of the sub-signals. Spare antenna 102 may be assigned to receive each of the sub-signals in a periodic or pseudo-random fashion. If "fast switching" is used for spare antenna 102, an improvement in reception for all of the sub-signals may be achieved. With fast switching, spare antenna 102 is reassigned many times during the duration of a single error coding block. The sub-blocks of the error control coding blocks received by spare antenna 102 may then be used by baseband processing circuit 108 to improve reception performance for each of the sub-signals.

An alternative antenna assignment strategy is to use signal quality information provided by baseband processing circuit 108 to determine the assignment of the spare antenna 102. Receiver 100 may periodically estimate the signal-to-noise ratio (SNR) for each primary antenna 102 and allocate the spare antenna 102 to the sub-signal with the lowest SNR. For example, in Figure 3, antennas 1, 2, and 4 are assigned respectively to sub-signals A, B, and C. Baseband processing circuit 108 may determine the SNR for the assignments (1, A), (2, B), and (4, C) respectively, and provide the SNR estimates to control unit 112. Based on the SNR estimates, control unit 112 allocates the spare antenna 102. For example, based on the SNR estimates control unit 112 may allocate the spare antenna 102 to sub-signal A, as shown in Figure 3.

In another embodiment of the invention, control unit 112 may periodically change the frequency assignments for all antennas 102, placing the spare antenna 102 with the sub-signal that benefits the most. In general, the best antenna 102 should be selected for each sub-signal, and the spare antenna 102 should be assigned to the sub-signal that benefits most from the extra antenna 102. One interpretation of "best" is the antenna 102 with the highest increase in signal to noise ratio. In the most general case, the receiver can compute the overall benefit resulting from any assignment of antennas. For instance, it can compute an effective overall SNR as experienced by an error control codeword, as a function of all the SNR's of the sub-signals contributing to that codeword. Thus, given a number of possible assignments, the receiver may choose the best one. The SNR may be computed in conventional fashion based on pilot symbols using well-known techniques. For example, the SNR for a G-RAKE processor is given by:

$$SNR = \frac{\mathbf{w}^H \mathbf{h} \mathbf{h}^H \mathbf{w}}{\mathbf{w}^H \mathbf{R} \mathbf{w}} , \qquad\qquad (1)$$

where h denotes the vector of channel taps, R denotes the noise covariance matrix, and w denotes the vector of combining weights for all sub-signals of interest. For a conventional RAKE processor, using combining weights w = h, and estimating only the average noise variance over the fingers, the SNR estimate is given by:

$$SNR = \frac{\mathbf{h}\mathbf{h}^H}{\sigma^2}. \qquad \qquad (2)$$

Other special cases of the general SNR formula may be used, as well as variance incorporating additional information, such as the transmit and receive filters.

In some embodiments, the SNR may be computed jointly for two or more antennas 102. For example, the receiver 100 shown in Figure 3 has one spare antenna 102. Assuming that one primary antenna 102 is assigned to each of the three sub-signals A - C of interest, baseband processing circuit 108 may compute the joint SNR for all possible pairings of the spare antenna 102 with the three primary antennas 102. When computing the joint SNR, the vector h contains channel taps for both antennas 102. The matrix R contains the covariance coefficients for any pair of delays from one antenna 102 or across the antennas 102. The combining weight vector w contains combining weights for both antennas 102. The resulting SNR reflects all of the information about both antennas 102 simultaneously and is consequently more accurate.

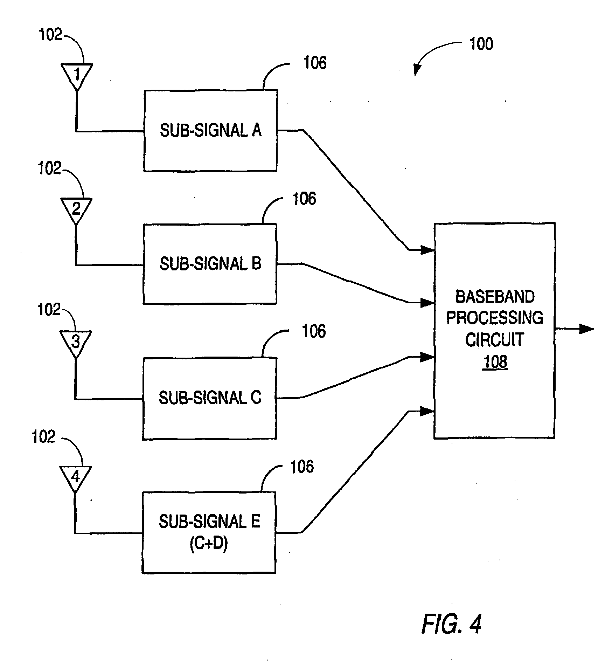

Figure 4 illustrates another configuration of receiver 100 where the sub-signals of interest have different bandwidths. In this example, four antennas 102 are used to receive four sub-signals A - D. The first three antennas 102 are assigned respectively to receive sub-signals A, B, and C. The fourth antenna 102 is assigned to receive a sub-signal E, which is a composite of sub-signals C and D. That is, the fourth antenna 102 covers the entire frequency range of sub-signals C and D. This example illustrates that a sub-signal may itself contain two or more sub-signals.

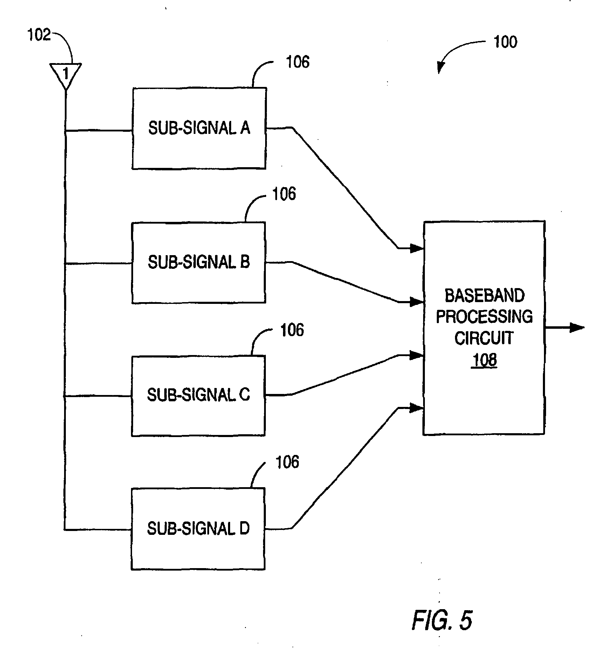

Figure 5 illustrates another receiver configuration wherein a single receive antenna 102 couples to two or more receiver front end circuits 106. In some circumstances, control unit 112 may elect to receive the entire wideband signal using a single antenna 102. In this case, the front end circuits 106 may be configured to receive different portions of the wideband signal. In this configuration, receiver 100 functions similarly to a conventional signal-antenna receiver.

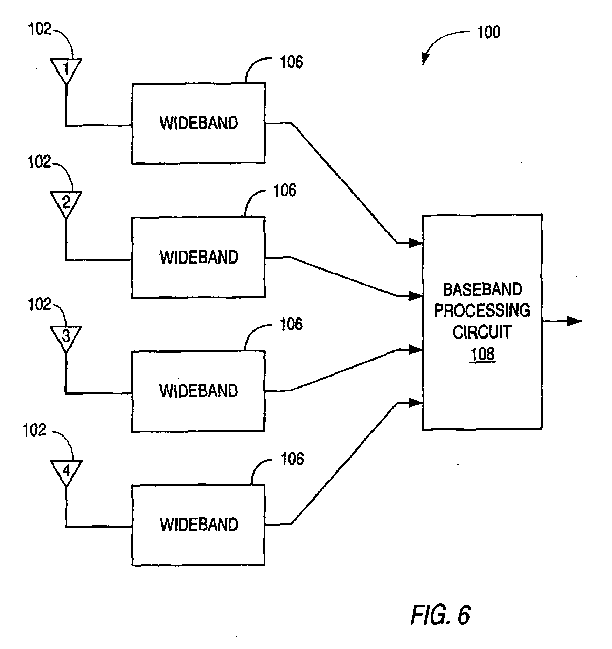

Figure 6 illustrates a receiver 100 with four spatially-diverse antennas configured as a diversity receiver. In this case, the entire wideband signal is received on each antenna 102. The receive signals output from front end circuits 106 may then be combined by baseband processing circuit 108 using maximal ratio combining or interference rejection combining techniques.

Control unit 112 determines which receiver configuration to use and performs antenna selection as described above based on channel quality measurements from the baseband processing circuit 108. In general, any antenna 102 may be assigned to receive any sub-signal of interest. The control unit 112 may determine the receiver configuration based on the number of sub-signals allocated to a communication link. For example, when four sub-signals are allocated, control unit 112 may configure receiver 100 as shown in Fig. 2A. When less than four sub-signals are allocated, control unit 112 may configure receiver 100 as shown in Fig. 3. Selection of the receiver configuration may take other factors into account, such as channel conditions, priority level, application type, etc. Once the receiver configuration is determined, control unit 112 assigns antennas 102 to receive the sub-signals of interest based on SNR or other channel quality measurements.

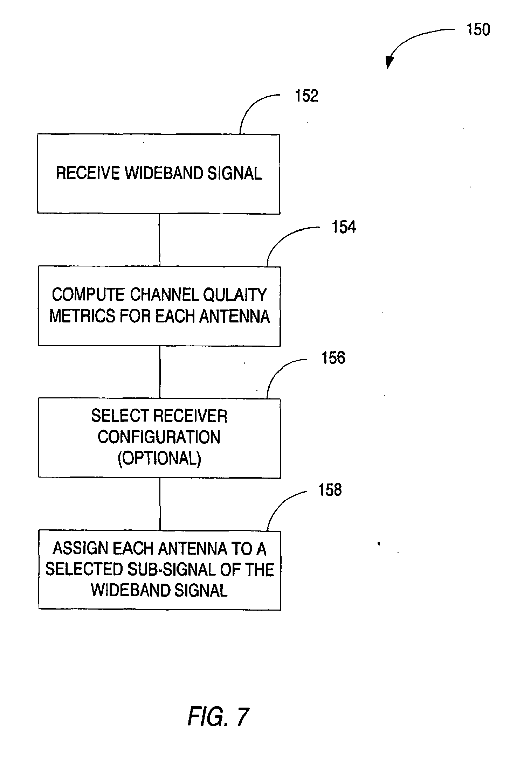

Fig. 7 illustrates exemplary logic 150 implemented by the control unit 112 and baseband processor 108 for selecting a receiver configuration and allocating antennas 102. A wideband signal containing two or more sub-signals is received by the receiver 100 (block 152). The baseband processor 108 at the receiver 100 processes the received signal, determines a channel quality metric for each antenna/sub-signal combination, and provides the results to the control unit 112 (block 154). The control unit 112 optionally selects a receiver configuration (block 156). The receiver configuration is the number of antennas 102 that will be used to receive the wideband signal. In some embodiment, the receiver configuration may be fixed and this step does not need to be performed. Once the receiver configuration is determined, the control unit assigns each antenna 102 to a selected sub-signal of the wideband signal based on the channel quality metrics (block 158). Different antennas may be assigned to different sub-signals. Using multiple antennas 102 to receive different sub-signals of interest in a wideband signal may significantly reduce the complexity of baseband processing circuit 108. In general, the complexity of baseband processing circuit 108 scales with bandwidth and number of antennas 102. By partitioning the bandwidth of a wideband signal into two or more sub-signals, the complexity of the baseband processing circuit 108 may be reduced.

The foregoing description and drawings illustrate some of the possible configurations of the receiver 100. Those skilled in the art will recognize that other receiver configurations may also be realized with the reconfigurable receiver 100. The baseband processing circuits 108 may be comprised of one or more processors, hardware, firmware, or a combination thereof. The baseband processing circuits 108 may be with the control unit 112 in a single microprocessor or application specific integrated circuit (ASIC). One or more memory devices may be used to store instructions for executing the functions described herein. The memory device may include read-only memory (ROM), random access memory (RAM), magnetic disk storage media, optical storage media, and/or flash memory devices.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method for receiving a wideband signal including multiple sub-signals (A-D), said method comprising:

   receiving the wideband signal using two or more receive antennas (102);
   selectively assigning a first one of said receive antennas (102) to receive a first sub-signal (A-D) of the wideband signal;
   selectively assigning a second one of said receive antennas (102) to receive a second sub-signal (A-D) of the wideband signal;

   **characterized in that** the first and second sub-signals (A-D) have different bandwidths and overlap in the frequency domain.

2. The method of claim 1 wherein the number of receive antennas (102) equals the number of sub-signals (A-D), and wherein each receive antenna (102) is assigned to receive a respective one of said sub-signals (A-D).

3. The method of claim 2 wherein each receive antenna (102) receives a different sub-signal (A-D) from the other receive antennas.

4. The method of claim 1 further comprises selectively assigning a third one of said receive antennas (102) to receive said first or second sub-signals (A-D).

5. The method of claim 4 further comprising combining said sub-signal (A-D) received on said third antenna (102) with said first or second signal (A-D).

6. The method of claim 4 wherein the third antenna (102) is assigned periodically to said first and second sub-signals (A-D).

7. The method of claim 4 wherein the third antenna (102) is assigned pseudo-randomly to said first and second sub-signals (A-D).

8. The method of claim 4 further comprising determining channel conditions associated with said first and second sub-signals (A-D), wherein said third antenna (102) is assigned to one of said first and second sub-signals (A-D) based on said channel conditions.

9. The method of claim 1 wherein the number of receive antennas (102) is at least equal to the number of sub-signals (A-D).

10. The method of claim 9 wherein at least one primary receive antenna (102) is assigned to receive each sub-signal (A-D).

11. The method of claim 10 including at least one secondary receive antenna (102), and further comprising assigning said secondary receive antenna (102) to receive one of said sub-signals (A-D).

12. The method of claim 1 wherein the wideband signal comprises a multiple carrier CDMA signal.

13. The method of claim 1 wherein the wideband signal comprises an OFDM carrier comprising a plurality of sub-carriers.

14. The method of claim 1 further comprising generating channel estimates for each sub-signal (A-D), and combining said channel estimates to produce a composite estimate for the wideband signal.

15. The method of claim 14 wherein combining said channel estimates to produce a composite estimate for the wideband signal comprises:

converting said channel estimates from a time domain to a frequency domain;
combining said channel estimates in the frequency domain to generate the composite estimate; and
converting the composite estimate back to the time domain.

16. A multi-antenna receiver (100) comprising:

a plurality of receive antennas (102);
a control unit (112) configured to select one or more of said receive antennas (102) to receive a wideband signal containing a plurality of sub-signals (A-D), said control unit (112) operative to:

selectively assign a first one of said selected receive antennas (102) to receive a first sub-signal (A-D) of the wideband signal; and
selectively assign a second one of said selected receive antennas (102) to receive a second sub-signal (A-D) of the wideband signal;

an antenna selection circuit (104) responsive to said control unit configured to couple said receive antennas (102) to a receiver circuit;

**characterized in that** the first and second sub-signals (A-D) have different bandwidths and partially overlap in the frequency domain.

17. The multi-antenna receiver (100) of claim 16 wherein the number of receive antennas (102) equals the number of sub-signals (A-D), and wherein the control unit (112) assigns each receive antenna (102) to receive a respective one of said sub-signals (A-D).

18. The multi-antenna receiver (100) of claim 17 wherein the control unit (112) assigns each receive antenna (102) to receive a different sub-signal (A-D).

19. The multi-antenna receiver (100) of claim 16 wherein the control unit (112) selectively assigns a third one of said receive antennas (102) to receive said first or second sub-signal (A-D).

20. The multi-antenna receiver (100) of claim 19 further comprising a processing circuit (108) configured to combine said sub-signal (A-D) received on said third antenna (102) with said sub-signal (A-D) received on said first or second receive antenna (102).

21. The multi-antenna receiver (100) of claim 19 wherein the control unit (112) periodically assigns the third antenna (102) to receive said first and second sub-signals (A-D).

22. The multi-antenna receiver (100) of claim 19 wherein the control unit (112) pseudo-randomly assigns the third antenna (102) to receive said first and second sub-signals (A-D).

23. The multi-antenna receiver (100) of claim 19 further comprising a processing circuit (108) configured to determine channel conditions associated with said first and second sub-signals (A-D), and wherein said control unit (112) assigns the third antenna (102) to one of said first and second sub-signals (A-D) based on said channel conditions.

24. The multi-antenna receiver (100) of claim 16 wherein the number of receive antennas (102) is at least equal to the number of sub-signals (A-D).

25. The multi-antenna receiver (100) of claim 24 wherein the control unit (112) assigns at least one primary receive antenna (102) to receive each sub-signal (A-D).

26. The multi-antenna receiver (100) of claim 25 including at least one secondary receive antenna (102), and wherein the control unit (112) assigns said secondary receive antenna (102) to receive one of said sub-signals (A-D).

27. The multi-antenna receiver (100) of claim 16 wherein the wideband signal comprises a multiple carrier CDMA signal.

28. The multi-antenna receiver (100) of claim 16 wherein the wideband signal comprises an OFDM carrier comprising a plurality of sub-carriers.

29. The multi-antenna receiver (100) of claim 16 further comprising a processing circuit (108) configured to generate channel estimates for each sub-signal and combine said channel estimates to produce a composite estimate for the wideband signal.

30. The multi-antenna receiver (100) of claim 29 wherein the processing circuit (108) combines said channel estimates to produce a composite estimate for the wideband signal by converting said channel estimates from a time domain to a frequency domain, combining said channel estimates in the frequency domain to generate the composite estimate, and converting the composite estimate back to the time domain.

31. The multi-antenna receiver (100) of claim 16 wherein the multi-antenna receiver (100) is disposed in a wireless communication device.


**Patentansprüche**

1. Verfahren zum Empfang eines Breitbandsignals mit mehreren Teilsignalen (A-D), wobei das Verfahren umfasst:

   Empfangen des Breitbandsignals unter Verwendung von zwei oder mehr Empfangsantennen (102);
   selektives Zuordnen einer ersten der Empfangsantennen (102) zum Empfangen eines ersten Teilsignals (A-D) des Breitbandsignals;
   selektives Zuordnen einer zweiten der Empfangsantennen (102) zum Empfangen eines zweiten Teilsignals (A-D) des Breitbandsignals;

   **dadurch gekennzeichnet, dass** die ersten und zweiten Teilsignale (A-D) verschiedene Bandbreiten aufweisen und sich im Frequenzbereich überlappen.

2. Verfahren nach Anspruch 1, wobei die Anzahl von Empfangsantennen (102) der Anzahl von Teilsignalen (A-D) entspricht, und wobei jede Empfangsantenne (102) zum Empfangen eines jeweiligen der Teilsignale (A-D) zugeordnet wird.

3. Verfahren nach Anspruch 2, wobei jede Empfangsantenne (102) ein unterschiedliches Teilsignal (A-D) von den anderen Empfangsantennen empfängt.

4. Verfahren nach Anspruch 1, ferner umfassend ein selektives Zuordnen einer dritten der Empfangsantennen (102) zum Empfangen der ersten oder zweiten Teilsignale (A-D).

5. Verfahren nach Anspruch 4, ferner umfassend ein Verknüpfen des Teilsignals (A-D), das an der dritten Antenne (102) empfangen wird, mit dem ersten oder zweiten Teilsignal (A-D).

6. Verfahren nach Anspruch 4, wobei die dritte Antenne (102) periodisch den ersten und zweiten Teilsignalen (A-D) zugeordnet wird.

7. Verfahren nach Anspruch 4, wobei die dritte Antenne (102) pseudozufällig den ersten und zweiten Teilsignalen (A-D) zugeordnet wird.

8. Verfahren nach Anspruch 4, ferner umfassend ein Bestimmen von Kanalbedingungen, die mit den ersten und zweiten Teilsignalen (A-D) assoziiert sind, wobei die dritte Antenne (102) einem der ersten und zweiten Teilsignale (A-D) basierend auf den Kanalbedingungen zugeordnet wird.

9. Verfahren nach Anspruch 1, wobei die Anzahl von Empfangsantennen (102) mindestens der Anzahl von Teilsignalen (A-D) entspricht.

10. Verfahren nach Anspruch 9, wobei wenigstens eine primäre Empfangsantenne (102) zum Empfangen jedes Teilsignals (A-D) zugeordnet wird.

11. Verfahren nach Anspruch 10, umfassend wenigstens eine sekundäre Empfangsantenne (102) und ferner umfassend ein Zuordnen der sekundären Empfangsantenne (102) zum Empfangen eines der Teilsignale (A-D).

12. Verfahren nach Anspruch 1, wobei das Breitbandsignal ein CDMA-Signal mit mehreren Trägern umfasst.

13. Verfahren nach Anspruch 1, wobei das Breitbandsignal einen OFDM-Träger mit einer Mehrzahl von Zwischenträgern umfasst.

14. Verfahren nach Anspruch 1, ferner umfassend ein Erzeugen von Kanalschätzungen für jedes Teilsignal (A-D) und Kombinieren der Kanalschätzungen, um eine zusammengesetzte Schätzung für das Breitbandsignal zu erzeugen.

15. Verfahren nach Anspruch 14, wobei das Kombinieren der Kanalschätzungen, um eine zusammengesetzte Schätzung für das Breitbandsignal zu erzeugen, umfasst:

Umsetzen der Kanalschätzungen von einem Zeitbereich in einen Frequenzbereich;
Kombinieren der Kanalschätzungen im Frequenzbereich, um die zusammengesetzte Schätzung zu erzeugen; und
Zurückumsetzen der zusammengesetzten Schätzung in den Zeitbereich.

16. Empfänger (100) mit mehreren Antennen, umfassend:

eine Mehrzahl von Empfangsantennen (102);
eine Steuereinheit (112), die so konfiguriert ist, dass sie eine oder mehrere der Empfangsantennen (102) zum Empfangen eines Breitbandsignals mit einer Mehrzahl von Teilsignalen (A-D) auswählt, wobei die Steuereinheit (112) so funktioniert, dass sie:

eine erste der Empfangsantennen (102) selektiv zum Empfangen eines ersten Teilsignals (A-D) des Breitbandsignals zuordnet;
eine zweite der Empfangsantennen (102) selektiv zum Empfangen eines zweiten Teilsignals (A-D) des Breitbandsignals zuordnet;

eine Antennenauswahlschaltung (104), die auf die Steuereinheit anspricht und so konfiguriert ist, dass sie die Empfangsantennen (102) mit einer Empfangsschaltung verbindet;

dadurch gekennzeichnet, dass die ersten und zweiten Teilsignale (A-D) verschiedene Bandbreiten aufweisen und sich im Frequenzbereich überlappen.

17. Empfänger (100) mit mehreren Antennen nach Anspruch 16, wobei die Anzahl von Empfangsantennen (102) der Anzahl von Teilsignalen (A-D) entspricht, und wobei die Steuereinheit (112) jede Empfangsantenne (102) zum Empfangen eines jeweiligen der Teilsignale (A-D) zuordnet.

18. Empfänger (100) mit mehreren Antennen nach Anspruch 17, wobei die Steuereinheit (112) jede Empfangsantenne (102) zum Empfangen eines unterschiedlichen Teilsignals (A-D) zuordnet.

19. Empfänger (100) mit mehreren Antennen nach Anspruch 16, wobei die Steuereinheit (112) eine dritte der Empfangsantennen (102) selektiv zum Empfangen des ersten oder zweiten Teilsignals (A-D) zuordnet.

20. Empfänger (100) mit mehreren Antennen nach Anspruch 19, ferner umfassend eine Verarbeitungsschaltung (108), die so konfiguriert ist, dass sie das Teilsignal (A-D), das an der dritten Antenne (102) empfangen wird, mit dem Teilsignal (A-D) verknüpft, das an der ersten oder zweiten Empfangsantenne (102) empfangen wird.

21. Empfänger (100) mit mehreren Antennen nach Anspruch 19, wobei die Steuereinheit (112) die dritte Antenne (102) periodisch zum Empfangen der ersten und zweiten Teilsignale (A-D) zuordnet.

22. Empfänger (100) mit mehreren Antennen nach Anspruch 19, wobei die Steuereinheit (112) die dritte Antenne (102) pseudozufällig zum Empfangen der ersten und zweiten Teilsignale (A-D) zuordnet.

23. Empfänger (100) mit mehreren Antennen nach Anspruch 19, fe r ner umfassend eine Verarbeitungsschaltung (108), die so konfiguriert ist, dass sie Kanalbedingungen bestimmt, die mit den ersten und zweiten Teilsignalen (A-D) assoziiert sind, wobei Steuereinheit (112) die dritte Antenne (102) einem der ersten und zweiten Teilsignale (A-D) basierend auf den Kanalbedingungen zuordnet.

24. Empfänger (100) mit mehreren Antennen nach Anspruch 16, wobei die Anzahl von Empfangsantennen (102) mindestens der Anzahl von Teilsignalen (A-D) entspricht.

25. Empfänger (100) mit mehreren Antennen nach Anspruch 24, wobei die Steuereinheit (112) wenigstens eine primäre Empfangsantenne (102) zum Empfangen jedes Teilsignals (A-D) zuordnet.

26. Empfänger (100) mit mehreren Antennen nach Anspruch 25, umfassend wenigstens eine sekundäre Empfangsantenne (102), und wobei die Steuereinheit (112) die sekundäre Empfangsantenne (102) zum Empfangen eines der Teilsignale (A-D) zuordnet.

27. Empfänger (100) mit mehreren Antennen nach Anspruch 16, wobei das Breitbandsignal ein CDMA-Signal mit mehreren Trägern umfasst.

28. Empfänger (100) mit mehreren Antennen nach Anspruch 16, wobei das Breitbandsignal einen OFDM-Träger mit einer Mehrzahl von Zwischenträgern umfasst.

29. Empfänger (100) mit mehreren Antennen nach Anspruch 16, ferner umfassend eine Verarbeitungsschaltung (108), die so konfiguriert ist, dass sie Kanalschätzungen für jedes Teilsignal (A-D) erzeugt und die Kanalschätzungen kombiniert, um eine zusammengesetzte Schätzung für das Breitbandsignal zu erzeugen.

30. Empfänger (100) mit mehreren Antennen nach Anspruch 29, wobei die Verarbeitungsschaltung (108) die Kanalschätzungen kombiniert, um eine zusammengesetzte Schätzung für das Breitbandsignal zu erzeugen, indem sie die Kanalschätzungen von einem Zeitbereich in einen Frequenzbereich umsetzt, die Kanalschätzungen im Frequenzbereich kombiniert, um die zusammengesetzte Schätzung zu erzeugen, und die zusammengesetzte Schätzung in den Zeitbereich zurück umsetzt.

31. Empfänger (100) mit mehreren Antennen nach Anspruch 16, wobei der Empfänger (100) mit mehreren Antennen in einem drahtlosen Kommunikationsgerät angeordnet ist.

**Revendications**

1. Procédé de réception d'un signal large bande incluant des sous-signaux multiples (A-D), ledit procédé comprenant les étapes consistant à :

   recevoir le signal large bande en utilisant deux ou plus antennes réceptrices (102) ;
   assigner sélectivement une première desdites antennes réceptrices (102) afin de recevoir un premier sous-signal (A-D) du signal large bande ;
   assigner sélectivement une seconde desdites antennes réceptrices (102) afin de recevoir un second sous-signal (A-D) du signal large bande ;

   **caractérisé en ce que** le premier et le second sous-signaux (A-D) ont des bandes passantes différentes et se superposent dans le domaine de fréquence.

2. Procédé selon la revendication 1, dans lequel le nombre d'antennes réceptrices (102) est égal au nombre de sous-signaux (A-D), et dans lequel chaque antenne réceptrice (102) est assignée afin de recevoir un signal respectif desdits sous-signaux (A-D).

3. Procédé selon la revendication 2, dans lequel chaque antenne réceptrice (102) reçoit un sous-signal différent (A-D) provenant des autres antennes réceptrices.

4. Procédé selon la revendication 1, comprenant en outre d'assigner sélectivement une troisième desdites antennes réceptrices (102) afin de recevoir ledit premier ou second sous-signal (A-D).

**5.** Procédé selon la revendication 4, comprenant en outre de combiner ledit sous-signal (A-D) reçu sur ladite troisième antenne (102) avec ledit premier ou second signal (A-D).

**6.** Procédé selon la revendication 4, dans lequel la troisième antenne (102) est assignée périodiquement audit premier et second sous-signaux (A-D).

**7.** Procédé selon la revendication 4, dans lequel la troisième antenne (102) est assignée de manière pseudo-aléatoire auxdits premier et second sous-signaux (A-D).

**8.** Procédé selon la revendication 4, comprenant en outre de déterminer les conditions de canal associées auxdits premier et second sous-signaux (A-D), dans lequel ladite troisième antenne (102) est assignée à un desdits premier et second sous-signaux (A-D) sur la base desdites conditions de canal.

**9.** Procédé selon la revendication 1, dans lequel le nombre d'antennes réceptrices (102) est au moins égal au nombre de sous-signaux (A-D).

**10.** Procédé selon la revendication 9, dans lequel au moins une antenne réceptrice primaire (102) est assignée afin de recevoir chaque sous-signal (A-D).

**11.** Procédé selon la revendication 10, incluant au moins une antenne réceptrice secondaire (102) et comprend en outre l'assignation de ladite antenne réceptrice secondaire (102) afin de recevoir un desdits sous-signaux (A-D).

**12.** Procédé selon la revendication 1, dans lequel le signal large bande comprend un signal CDMA à porteuses multiples.

**13.** Procédé selon la revendication 1, dans lequel le signal large bande comprend une porteuse OFDM transportant une pluralité de sous-porteuses.

**14.** Procédé selon la revendication 1, comprenant en outre de générer des estimations de canal pour chaque sous-signal (A-D) et de combiner lesdites estimations de canal afin de produire une estimation mixte pour le signal large bande.

**15.** Procédé selon la revendication 14, dans lequel la combinaison desdites estimations de canal afin de produire une estimation mixte pour le signal large bande comprend de :

convertir lesdites estimations de canal d'un domaine temporel à un domaine de fréquence ;
combiner lesdites estimations de canal dans le domaine de fréquence afin de générer l'estimation mixte ; et
reconvertir l'estimation mixte au domaine temporel.

**16.** Récepteur multi-antennes (100) comprenant :

une pluralité d'antennes réceptrices (102) ;
une unité de commande (112) configurée afin de sélectionner une ou plusieurs desdites antennes réceptrices (102) afin de recevoir un signal large bande contenant une pluralité de sous-signaux (A-D), ladite unité de commande (112) étant opérationnelle afin de :

assigner sélectivement une première desdites antennes réceptrices sélectionnées (102) afin de recevoir un premier sous-signal (A-D) du signal large bande, et
assigner sélectivement une seconde desdites antennes réceptrices sélectionnées (102) afin de recevoir un second sous-signal (A-D) du signal large bande ;

un circuit de sélection d'antenne (104) en réponse à ladite unité de commande configurée afin de coupler lesdites antennes réceptrices (102) à un circuit récepteur ;

**caractérisé en ce que** le premier et le second sous-signaux (A-D) ont des bandes passantes différentes et se superposent partiellement dans le domaine de fréquence.

**17.** Récepteur multi-antennes (100) selon la revendication 16, dans lequel le nombre d'antennes réceptrices (102) est égal au nombre de sous-signaux (A-D), et dans lequel l'unité de commande (112) assigne à chaque antenne réceptrice (102) de recevoir un sous-signal respectif desdits sous-signaux (A-D).

18. Récepteur multi-antennes (100) selon la revendication 17, dans lequel l'unité de commande (112) assigne à chaque antenne réceptrice (102) de recevoir un sous-signal différent (A-D).

19. Récepteur multi-antennes (100) selon la revendication 16, dans lequel l'unité de commande (112) assigne sélectivement une troisième desdites antennes réceptrices (102) afin de recevoir lesdits premier et second sous-signaux (A-D).

20. Récepteur multi-antennes (100) selon la revendication 19, comprenant en outre un circuit de traitement (108) configuré afin de combiner ledit sous-signal (A-D) reçu sur ladite troisième antenne (102) avec ledit sous-signal (A-D) reçu sur ladite première ou seconde antennes réceptrice (102).

21. Récepteur multi-antennes (100) selon la revendication 19, dans lequel l'unité de commande (112) assigne périodiquement la troisième antenne (102) afin de recevoir lesdits premier et second sous-signaux (A-D).

22. Récepteur multi-antennes (100) selon la revendication 19, dans lequel l'unité de commande (112) assigne de manière pseudo-aléatoire la troisième antenne (102) afin de recevoir lesdits premier et second sous-signaux (A-D).

23. Récepteur multi-antennes (100) selon la revendication 19, comprenant en outre un circuit de traitement (108) configuré afin de déterminer les conditions de canal associées auxdits premier et second sous-signaux (AD), et dans lequel ladite unité de commande (112) assigne la troisième antenne (102) à un desdits premier et second sous-signaux (A-D) sur la base desdites conditions de canal.

24. Récepteur multi-antennes (100) selon la revendication 16, dans lequel le nombre d'antennes réceptrices (102) est au moins égal au nombre de sous-signaux (A-D).

25. Récepteur multi-antennes (100) selon la revendication 24, dans lequel l'unité de commande (112) assigne au moins une antenne de réception primaire (102) afin de recevoir chaque sous-signal (A-D).

26. Récepteur multi-antennes (100) selon la revendication 25, incluant au moins une antenne réceptrice secondaire (102), et dans lequel l'unité de commande (112) assigne ladite antenne de réception secondaire (102) afin de recevoir un desdits sous-signaux (A-D).

27. Récepteur multi-antennes (100) selon la revendication 16, dans lequel le signal large bande comprend un signal CDMA à porteuses multiples.

28. Récepteur multi-antennes (100) selon la revendication 16, dans lequel le signal large bande comprend une porteuse OFDM comprenant une pluralité de sous-porteuses.

29. Récepteur multi-antennes (100) selon la revendication 16, comprenant en outre un circuit de traitement (108) configuré afin de générer des estimations de canal pour chaque sous-signal et combiner lesdites estimations de canal afin de produire une estimation mixte pour le signal large bande.

30. Récepteur multi-antennes (100) selon la revendication 29, dans lequel le circuit de traitement (108) combine lesdites estimations de canal afin de produire une estimation mixte pour le signal large bande en convertissant lesdites estimations de canal d'un domaine temporel à un domaine de fréquence, combinant lesdites estimations de canal dans le domaine de fréquence afin de générer l'estimation mixte et reconvertissant l'estimation mixte au domaine temporel.

31. Récepteur multi-antennes (100) selon la revendication 16, dans lequel le récepteur multi-antennes (100) est disposé dans un dispositif de communication sans fil.

FIG. 1

FIG. 2A

FIG. 2B

FIG. 2C

EP 2 062 379 B1

*FIG. 3*

100

SUB-SIGNAL A — 106

SUB-SIGNAL B — 106

SUB-SIGNAL C — 106

SUB-SIGNAL E (C+D) — 106

1 — 102

2 — 102

3 — 102

4 — 102

BASEBAND PROCESSING CIRCUIT 108

*FIG. 4*

EP 2 062 379 B1

*FIG. 5*

FIG. 6

150

152

RECEIVE WIDEBAND SIGNAL

154

COMPUTE CHANNEL QULAITY
METRICS FOR EACH ANTENNA

156

SELECT RECEIVER
CONFIGURATION
(OPTIONAL)

158

ASSIGN EACH ANTENNA TO A
SELECTED SUB-SIGNAL OF THE
WIDEBAND SIGNAL

*FIG. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005067171 A
- EP 1533916 A1